# EUROPEAN PATENT SPECIFICATION

(11) **EP 1 407 124 B1**
(45) Date of publication and mention of the grant of the patent: **27.06.2007**
(21) Application number: 02730499.7
(22) Date of filing: 13.06.2002
(51) Int. Cl.: F02B 11/00, F02D 13/02

(54) **ENGINE WITH CONTROLLED AUTO-IGNITION**
MOTOR MIT GESTEUERTER SELBSTZÜNDUNG
MOTEUR A AUTO-ALLUMAGE REGULE

(30) Priority: 28.06.2001 GB 0115812
(43) Date of publication of application: 14.04.2004
(73) Proprietor: Ford Global Technologies, LLC, Dearborn, MI 48126 (US)
(72) Inventor: MA, Thomas, Tsoi-Hei, Chlemsford, Essex CM3 5YL (GB)
(74) Representative: Messulam, Alec Moses
(86) International application number: PCT/GB2002/002689
(87) International publication number: WO 2003/002857

(56) References cited:
- EP-A- 1 156 199
- DE-A- 19 546 854
- GB-A- 2 349 419
- US-A- 3 882 833
- US-B1- 6 178 933

## Description

The present invention relates to a four-stroke internal combustion engine with controlled auto-ignition, sometimes also referred to as homogeneous charge compression ignition.

It is known that engines, running with controlled auto-ignition yield good fuel consumption and very low NOx emissions. Controlled auto-ignition is achieved by arranging for the trapped charge in the engine cylinders at the end of each intake stroke to contain to a high proportion of hot residual gases. Because of the high temperature of trapped charge and the concentration of free radicals in the residual gases, multiple ignition kernels are present and the trapped charge spontaneously ignites when the charge is compressed before it is ignited by a spark.

Different proposals have previously been put forward in order to achieve a high proportion of residual gases in the trapped charge. In GB-A-2349419, the inlet valve is opened early (before TDC at the end of the exhaust stroke) so that exhaust gases from one operating cycle are forced back into the intake port and drawn back into the combustion chamber at the commencement of the next cycle. Another approach has been to close the exhaust valve early in the exhaust stroke (thereby trapping a high proportion of the exhaust gases in the cylinder). The piston is then allowed to continue towards TDC with all the valves closed to compress the trapped exhaust gases. At the commencement of the ensuing intake stroke, the intake valve is allowed to remain closed until the pressure in the cylinder is near the ambient pressure (thereby recovering the energy used in compressing the exhaust gases). The intake valve then opens for the remainder of the intake stroke to admit a fresh charge into the cylinder to mix with the residual gases already present from the preceding cycle.

Using the latter method of operation, stable engine running was achieved under controlled auto-ignition but load control could only be effected by valve timing and not by throttling. The reason for this is that because of the short duration of the intake event, the valve lift is limited and the extent of throttling by the intake valve is such that further throttling upstream of the intake valve has little effect. As a result, the load range over which controlled auto-ignition can be used is severely limited. A further disadvantage of the known method is that switchable cams needed to be used for both the intake and the exhaust valves as the valve events required for controlled auto-ignition could not be achieved by cams suitable for use during normal operation.

The present invention seeks therefore to mitigate the foregoing disadvantages and to provide an engine that can be operated in the controlled auto-ignition mode over an extended load range and in which the engine load can be controlled continuously over the whole of the extended range.

According to the present invention, there is provided a four stroke spark ignition internal combustion engine capable of operating in a controlled auto-ignition mode, comprising a combustion chamber, an intake system, an exhaust system, an exhaust valve controlling the discharge of gas from the combustion chamber into the exhaust system, an intake valve controlling the flow of gases into the combustion chamber from the intake system, and a valve operating mechanism for opening and closing the intake and exhaust valves, wherein, when the engine is operated in the controlled auto-ignition mode, the valve operating mechanism is operative to open the exhaust valve during substantially the whole of the exhaust stroke, to maintain the exhaust valve open for substantially the whole of the subsequent intake stroke and to open the intake valve during the intake stroke, such that, during the intake stroke, the cylinder charge enters the combustion chamber in two streams, one stream comprising exhaust gases entering by way of the exhaust valve from the exhaust system and the other stream comprising a fresh air charge entering by way of the intake valve from the intake system, characterised in that the valve operating mechanism comprises, either hydraulically actuated exhaust valves or different exhaust cams and switchable exhaust tappets engageable during normal operation and controlled auto-ignition operation, respectively.

In the invention, the exhaust gases and the fresh air charge can be admitted through fully open valves and this allows the relative quantities of exhaust gases and fresh air to be varied in a conventional manner using suitable flow throttles. In the absence of any throttling, the exhaust gas and fresh air will be present in approximately equal quantities but by using a conventional throttle in the intake system, the proportion of exhaust gases can be increased significantly.

It will be noted that while the exhaust valve timing is unusual and cannot be implemented using a conventional camshaft and valve train, the timing of the intake valves is generally conventional and does not require modification to the valve train. Thus in additional to extending the controlled auto-ignition range, the invention offers the important additional advantage is reduced complexity which in turn reduces manufacturing costs and improves reliability.

It has been found that by resorting to the valve timing regime proposed in the present invention the engine can be operated to 6 bar BMEP, corresponding to half load, in the controlled auto-ignition mode and the load can be continuously reduced down to 1 bar BMEP by the use of an intake throttle alone (without the complexity of variable valve timing).

While the invention can be applied to a single cylinder engine, it operates better in a multi-cylinder environment because the exhaust of one cylinder will immediately be admitted into another cylinder without it having to dwell for any length of time in the exhaust system. In this way, the trapped exhaust gases in each cylinder are hotter and fresher (still full of radicals) which improves the conditions for auto-ignition.

The invention will now be described further, by way of example, with reference to the accompanying drawings, in which:
Figure 1 is a block diagram of an engine having a variable valve timing control system for operating the engine in a controlled auto-ignition mode, and
Figure 2 is a phase diagram showing the timing of the intake and exhaust events both during full load operation and during operation in the controlled auto-ignition mode.

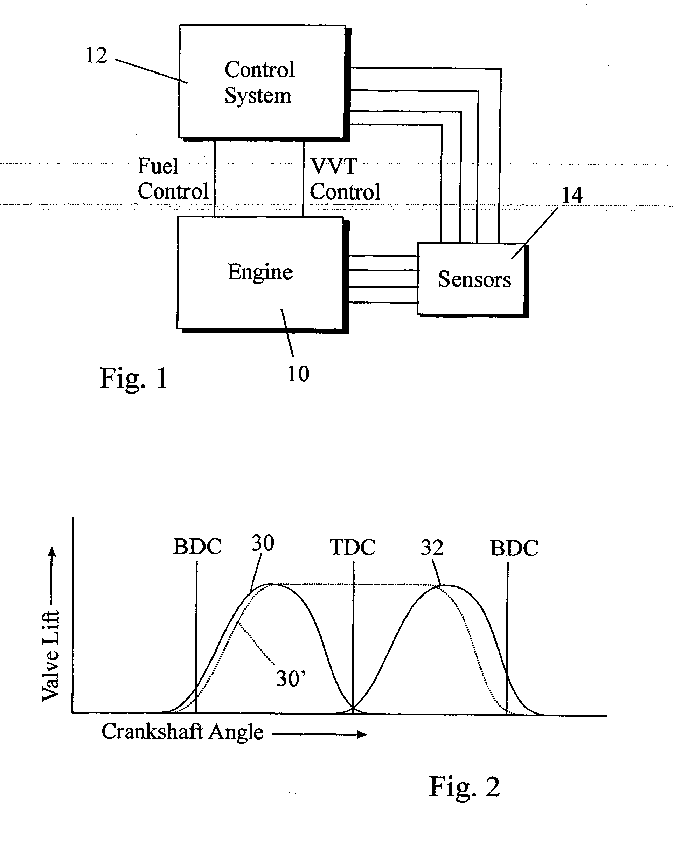

In Figure 1, an engine 10 is fitted with various sensors 14 that measure such parameters as engine speed, load, crank angle position etc. These parameters are entered into a control system which sets such operating parameters as the fuel quantity and timing, spark timing and valve timing. Most of these functions are not relevant to the present invention and are mentioned only in passing for completeness.

The present invention is instead concerned only with valve timing to achieve controlled auto-ignition over a range of engine loads. The engine has a conventional valve train driving the intake valve and its event is represented by the line 32 in Figure 2. During operation under all conditions, such as high load, when the engine cannot operate with controlled auto-ignition, the exhaust valve event is also conventional and is represented by the line 30 in Figure 2. At all times that the engine is not operating in controlled auto-ignition mode, the control system 12 performs normal control of the valve timing, fuel injection quantity and spark timing in accordance with the mapping of the engine.

When the engine is to be run with controlled auto-ignition on the other hand, by resorting to the use of exhaust cams with different profiles and switchable tappets (as shown for example in US-4,535,733), or electrically and/or hydraulically actuated exhaust valves (as shown for example in US-5,255,641), the control system 12 switches the engine exhaust valve event to that represented by the dotted line 30' in Figure 2. Here it can be seen that exhaust valve opens at the normal time (near the commencement of the exhaust stroke) but instead of closing near TDC remains opens throughout all or most of the intake stroke. The timing of the intake event 32 on the other hand still remains unaltered. The effect of this timing is that parallel streams of exhaust gas and fresh air are admitted into the cylinder throughout the intake stroke. Furthermore, both the intake and exhaust valves are wide open, thereby offering little flow resistance and permitting the relative proportions of fresh air and exhaust gases to be varied using a conventional intake throttle (not shown). In this manner, the engine load can be reduced continuously from approximately half load down to around 1 bar BMEP using the intake throttle alone.

It is possible to operate the engine at even higher loads in auto-ignition mode by resorting to turbocharging or supercharging. If turbocharging is used, the exhaust and intake pressures are both increased in unison so that the ratio of fresh air to exhaust gases is not affected. It is however necessary to exercise caution as the risk of uncontrolled detonation increases and this can result in engine damage.

It will be appreciated that numerous systems have been proposed in the past to vary the phasing and duration of the events of the inlet and exhaust valves of an internal combustion engine and passing reference has been made above to examples of such variable valve timing systems. For this reason, it is believed that the person skilled in the art will require no further explanation of the manner in which the present invention may be implemented, mechanically, electrically and/or hydraulically.

## Claims

1. A four stroke spark ignition internal combustion engine capable of operating in a controlled auto-ignition mode, comprising
a combustion chamber,
an intake system,
an exhaust system,
an exhaust valve controlling the discharge of gas from the combustion chamber into the exhaust system,
an intake valve controlling the flow of gases into the combustion chamber from the intake system, and
a valve operating mechanism for opening and closing the intake and exhaust valves,
wherein, when the engine is operated in the controlled auto-ignition mode, the valve operating mechanism is operative to open the exhaust valve during substantially the whole of the exhaust stroke, to maintain the exhaust valve open for substantially the whole of the subsequent intake stroke and to open the intake valve during the intake stroke, such that, during the intake stroke, the cylinder charge enters the combustion chamber in two streams, one stream comprising exhaust gases entering by way of the exhaust valve from the exhaust system and the other stream comprising a fresh air charge entering by way of the intake valve from the intake system, wherein
the valve operating mechanism comprises either hydraulically actuated exhaust valves or different exhaust cams and switchable exhaust tappets engageable during normal operation and controlled auto-ignition operation, respectively.

2. An engine as claimed in claim 1, wherein the engine has multiple cylinders.

## Patentansprüche

1. Ein Viertakt-Funkenzündungs-Verbrennungsmotor, der in der Lage ist in einem geregelten Selbstzündungsmodus zu arbeiten; und der umfaßt:
eine Verbrennungskammer;
ein Ansaugsystem;
ein Abgassystem;
ein den Ausstoß von Gas aus der Verbrennungskammer in das Abgassystem hinein regelndes Auslaßventil;
ein das Einströmen von Gasen aus dem Einlaßsystem in die Verbrennungskammer hinein regelndes Einlaßsystem; und
einen Ventilbetätigungsmechanismus zum Öffnen und Schließen der Einlaß- und Auslaßventile; in dem der Ventilbetätigungsmechanismus arbeitet um die Auslaßventile - wenn der Motor im geregelten Selbstzündungsmodus betrieben wird - im Wesentlichen während des gesamten Abgashubs zu öffnen, um das Auslaßventil im Wesentlichen für den gesamten folgenden Ansaughub geöffnet zu halten, und um das Einlaßventil während des Ansaughubs derart zu öffnen, daß die Zylinderladung während des Ansaughubs in zwei Strömen in die Verbrennungskammer eintritt; wobei ein Strom aus Abgasen besteht, die über die Auslaßventile vom Abgassystem eintreten, und der andere Strom aus einer frischen Luftladung besteht, die über die Einlaßventile aus dem Einlaßsystem eintritt;
und in dem der Ventilbetätigungsmechanismus entweder hydraulisch betätigte Auslaßventile oder verschiedene Abgasnocken und umschaltbare Abgasstößel enthält, die jeweils während normalem Betrieb und geregeltem Selbstzündungsbetrieb einrückbar sind.

2. Ein Motor wie in Anspruch 1 beansprucht, in dem der Motor mehrere Zylinder aufweist.

## Revendications

1. Moteur à combustion interne à allumage par étincelle à quatre temps pouvant fonctionner dans un mode d'auto-allumage commandé, comprenant
une chambre de combustion,
un système d'admission,
un système d'échappement,
une soupape d'échappement commandant l'évacuation de gaz depuis la chambre de combustion jusque dans le système d'échappement,
une soupape d'admission commandant l'écoulement de gaz dans la chambre de combustion à partir du système d'admission, et
un mécanisme de commande de soupapes destiné à ouvrir et fermer les soupapes d'admission et d'échappement,
dans lequel, lorsque le moteur est mis en oeuvre dans le mode d'auto-allumage commandé, le mécanisme de commande de soupapes peut fonctionner pour ouvrir la soupape d'échappement au cours de pratiquement toute la course d'échappement, afin de maintenir la soupape d'échappement ouverte pendant pratiquement toute la course d'admission suivante et pour ouvrir la soupape d'admission au cours de la course d'admission, de telle sorte que, au cours de la course d'admission, la charge de cylindre pénètre dans la chambre de combustion en deux flux, un premier flux constitué des gaz d'échappement entrant par l'intermédiaire de la soupape d'échappement à partir du système d'échappement et un autre flux constitué d'une charge d'air frais entrant par l'intermédiaire de la soupape d'admission à partir du système d'admission,
dans lequel le mécanisme de commande de soupapes comprend soit des soupapes d'admission actionnées hydrauliquement, soit des cames d'échappement différentes et des poussoirs de soupapes d'échappement fonctionnant en alternance et pouvant s'engager au cours d'un fonctionnement normal et au cours d'un fonctionnement d'auto-allumage commandé, respectivement.

2. Moteur selon la revendication 1, dans lequel le moteur comporte de multiples cylindres.
